# EUROPÄISCHE PATENTSCHRIFT

(11) **EP 0 510 345 B1**
(45) Veröffentlichungstag und Bekanntmachung des Hinweises auf die Patenterteilung: **18.09.1996**
(21) Anmeldenummer: 92104341.0
(22) Anmeldetag: 13.03.1992
(51) Int. Cl.: H04R 1/02, H04R 9/06, B60R 11/02

(54) **Lautsprecher für den Kraftfahrzeugeinsatz**
Loudspeaker for use in a vehicle
Haut-parleur pour usage dans un véhicule

(30) Priorität: 20.04.1991 DE 4113017
(43) Veröffentlichungstag der Anmeldung: 28.10.1992
(73) Patentinhaber: Nokia (Deutschland) GmbH, D-75175 Pforzheim (DE)
(72) Erfinder: Etzel, Hubert, Dipl.-Ing., W-8380 Landau a.d. Isar (DE); Scholz, Leander, Dipl.-Ing., W-8440 Straubing (DE)

(56) Entgegenhaltungen:
- WO-A-87/05771
- WO-A-90/11667
- DE-A- 3 334 442
- DE-A- 3 521 088

## Beschreibung

### Technisches Gebiet

Die Erfindung befaßt sich mit der Verminderung der Verletzungsgefahr durch Lautsprecher in Kraftfahrzeugen.

### Stand der Technik

Schon seit langem werden Lautsprecher in Türen von Kraftfahrzeugen angeordnet. Dies deshalb, weil zwischen der Innenverkleidung und der äußeren Blechhaut der Tür für den Einsatz von großdimensionierten Tieftonlautsprechern genügend große, für eine akzeptable Klangwiedergabe erforderliche Volumina zur Verfügung stehen. Je nach Ausführung sind dabei die Lautsprecher entweder direkt als "offenes System" in die Türverkleidung eingesetzt oder als geschlossenes Boxensystem hinter der Türverkleidung angeordnet. Auch sind Ausführungen bekannt, bei denen der Lautsprecher in eine Box eingesetzt und diese Box auf die Türverkleidung aufgesetzt ist. All diesen Ausführungen ist gemein, daß die Lautsprecher, insbesondere wenn es sich um relativ großdimensionierte Tieftonlautsprecher handelt, im unteren Bereich der Tür nahe den Orten, an denen die Tür an der Karosserie angeschlagen ist, angebracht sind. Diese Positionierung folgt zum einen daraus, daß die eingebauten Lautsprecher die Funktion der Seitenscheiben nicht behindern sollen, und zum anderen daraus, daß der Schalldruck der Türlautsprecher nach Möglichkeit frei, daß heißt ohne dämpfenden Einfluß von Personen und Fahrzeugteilen in den Fahrzeuginnenraum abgestrahlt werden soll.

Zur Funktionsweise und zum Aufbau von Konuslautsprechern wird stellvertretend auf den Aufsatz in der Funkschau 1983, Heft 7, Seite 77, verwiesen. In diesem Zusammenhang sei jedoch zum besseren Verständnis der Anmeldung ausgeführt, daß der konusförmige Lautsprecherkorb aus einem unteren Flansch und einem oberen Flansch sowie einer Mehrzahl von Stegen, die die beiden Flansche verbinden, gebildet ist. Am unteren Flansch ist das Magnetsystem fest angesetzt. Mit dem oberen Flansch ist der Lautsprecher in die Box oder die Türverkleidung eingesetzt.

Der Lautsprecherkorb hat die Aufgabe, das Magnetsystem so festzuhalten, daß Schwingungen des Korbes und des mit ihm direkt verbundenen Dauermagneten ausgeschlossen sind. Da die Dauermagneten, insbesondere bei großdimensionierten Tieftonlautsprechern mitunter ein beträchtliches Gewicht erreichen können, wird die zuvor genannte Aufgabe dadurch gelöst, daß der Lautsprecherkorb für derartige Lautsprecher entsprechend steif und stabil ausgebildet wird. Sind die Lautsprecher für den Einsatz in Kraftfahrzeugen bestimmt, werden die Erschütterungen, die beim Betrieb des Kraftfahrzeugs entstehen und ein Schwingen des Magnetsystems herbeiführen können, bei der Dimensionierung des Lautsprecherkorbes mitberücksichtigt.

Kommt es zu einem Zusammenstoß zweier Kraftfahrzeuge, bei dem das eine Fahrzeug in den Türbereich des anderen Fahrzeugs hineinfährt, kann es vorkommen, daß, wenn Lautsprecher in der Fahrzeugtür angeordnet sind, die zusammenstoßbedingte Krafteinwirkung auf das Magnetsystem von dem unteren Flansch über die Stege auf den oberen Flansch übertragen wird. Die Folge ist dann, daß der Lautsprecher oder besser gesagt der obere Flansch des Lautsprechers aus der Türverkleidung herausgedrückt wird und dadurch, daß er hervorsteht, zu Verletzungen der Insassen führen kann.

Diesem Problem begegnete man herkömmlich dadurch, daß die Tieftonlautsprecher verkleinert wurden oder an Plätzen in der Tür angeordnet wurden, die die eben dargestellten Verletzungen der Personen ausschließen.
Beide Maßnahmen sind aber vom akustischen Standpunkt aus als nachteilig anzusehen. Außerdem werden durch die Anordnung der Lautsprecher an verletzungssicheren Orten die Einbauplätze in einer Kraftfahrzeugtür stark vermindert.

Daher liegt der Erfindung die Aufgabe zugrunde, Lautsprecher, insbesondere Tieftonlautsprecher anzugeben, die trotz ihrer großen Dimensionierung und des Einbaus in Türen von Kraftfahrzeugen bei einem Unfall des Kraftfahrzeugs im Türbereich nicht durch die damit verbundene Kraftentfaltung aus der Verkleidung austreten.

### Darstellung der Erfindung

Diese Aufgabe wird gemäß Anspruch 1 dadurch gelöst, daß der Korb des Lautsprechers so ausgebildet ist, daß bei Krafteinwirkung auf das Magnetsystem bzw. auf das mit dem Magnetsystem verbundene Ende des Korbes diese Krafteinwirkung nicht oder nur in erheblich gemindertem Umfang auf das andere Ende des Korbes übertragen wird.

Dies kann - wie in Anspruch 2 angegeben - derart gelöst sein, daß der Korb an seinem Umfang Sollbruchstellen aufweist, die bei Überschreitung einer bestimmten Krafteinwirkung auf das Magnetsystem aufbrechen und ein Eindrücken des Teiles, an welchem das Magnetsystem befestigt ist, in den Raum, in dem die Membran angeordnet ist, erlaubt.

Es wird darauf hingewiesen, daß Sollbruchstellen im Sinne dieser Anmeldung eine Mehrzahl von miteinander nicht verbundener Sollbruchstellen als auch bloß eine durchgehend augebildete Sollbruchstelle umfassen kann.

Sind die Sollbruchstellen am Korb so weit von der Lautsprechermittelachse entfernt angeordnet, daß dieser Abstand A das Maß B, welches zwischen der Lautsprechermittelachse und dem hiervon am weitesten entfernt liegenden Bereich des Magnetsystems gemessen wird, übersteigt, hat dies den Vorteil, daß ein Einschieben des Magnetsystems in den Raum, in welchem die Membran angeordnet ist, nicht durch das Magnetsystem bzw. dessen Umfang verhindert wird. Aus dem letzteren Grunde heraus sollte auch - wie in Anspruch 4 angegeben - die Sollbruchstelle so ausgebildet sein, daß durch sie ein Eindringen des abgebrochenen und mit dem Magnetsystem verbundenen Teiles des Korbes nicht behindert wird.

Wird beispielsweise ein gemäß Anspruch 5 aus Metall gebildeter Korb mit einem Sollknickbereich versehen, wird die auf das Magnetsystem bei einem Unfall einwirkende Kraft an der Sollknickstelle des Korbes in Verformungsenergie umgesetzt und dadurch ein Eindringen des oberen Flansches des Lautsprechers in den Fahrgastraum vermieden. Wie schon beim Sollbruchstellenbereich angedeutet, kann auch der Sollknickstellenbereich durchgehend oder unterbrochen am Umfang des Korbes ausgebildet sein.

Ergänzend sei darauf hingewiesen, daß die Tiefe des Korbes
im Bedarfsfalle mit mehr als einem Sollbruch- oder Sollknickbereich versehen werden kann. Letztere Maßnahme ist dann zu ergreifen, wenn bei Anordnung nur eines Sollbruch- bzw. Sollknickbereichs zu befürchten ist, daß bei einem Unfall der obere Flansch aus der Türverkleidung austritt bzw. das Magnetsystem und der an ihm anhaftende Teil des Korbes aus der Türverkleidung heraustritt.

### Kurze Darstellung der Figuren

Es zeigen:
- Figur 1: einen Lautsprecher im Seitenschnitt, und
- Figur 2: einen Lautsprecher gemäß Figur 1 im deformierten Zustand.

### Wege zum Ausführen der Erfindung

Die Erfindung soll nun anhand der beiden Figuren näher veranschaulicht werden.

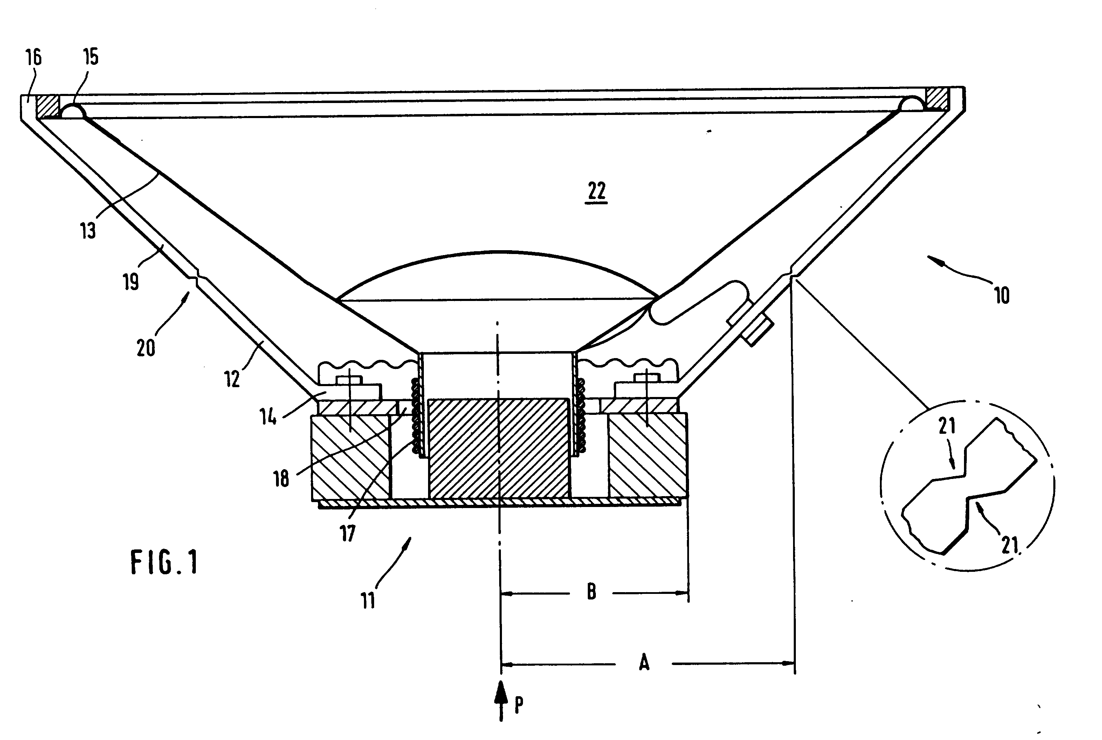

Der in Figur 1 dargestellte Lautsprecher 10 besteht im wesentlichen aus einem Magnetsystem 11, einem konusförmig ausgebildeten Lautsprecherkorb 12 und einer ebenfalls konusförmig ausgebildeten Membran 13. Das Magnetsystem 11 ist am unteren Flansch 14 des Korbes 12 angesetzt. Die Membran 13 ist in den Korb 12 eingesetzt und am oberen Rand mittels einer an der Membran 13 angeklebten Sicke 15 mit dem oberen Flansch 16 des Korbes 12 verbunden. Das untere Ende der Membran 13 taucht mit der dort angeordneten Schwingspule 17 in den Luftspalt 18 des Magnetsystems 11 ein.

Der obere Flansch 16 ist mit dem unteren Flansch 14 über Stege 19 verbunden. Diese Stege 19 weisen etwa auf halber Wegstrecke zwischen dem oberen und dem unteren Flansch 14, 16 einen Sollbruchstellenbereich 20 auf.

Dieser Sollbruchstellenbereich 20 ist durch eine vergrößerte Detailzeichnung näher veranschaulicht. Hieraus wird ersichtlich, daß der Sollbruchstellenbereich 20 durch zwei beidseitig am Steg 19 angebrachte Einkerbungen 21 besteht, welche den Steg 19 bzw. das dort vorhandene Material schwächen. Deutlich in der Detailzeichnung sichtbar ist auch, daß die rechte Flanke der oberen Einkerbung 21 mit der linken Flanke der unteren Einkerbung 21 fluchtet. Diese Ausbildung der Sollbruchstelle 20 gewährleistet, daß beim Aufbrechen der Sollbruchstellen 20 die Kanten ein Einschieben des Magnetsystems 11 nicht behindern.

Figur 1 veranschaulicht weiter, daß das Maß B zwischen der Lautsprechermittelachse und dem von dieser Achse am weitesten entfernten Bereich des Magnetsystems 11 immer noch kleiner ist als der Abstand A zwischen der Lautsprechermittelachse und dem Sollbruchstellenbereich 20.

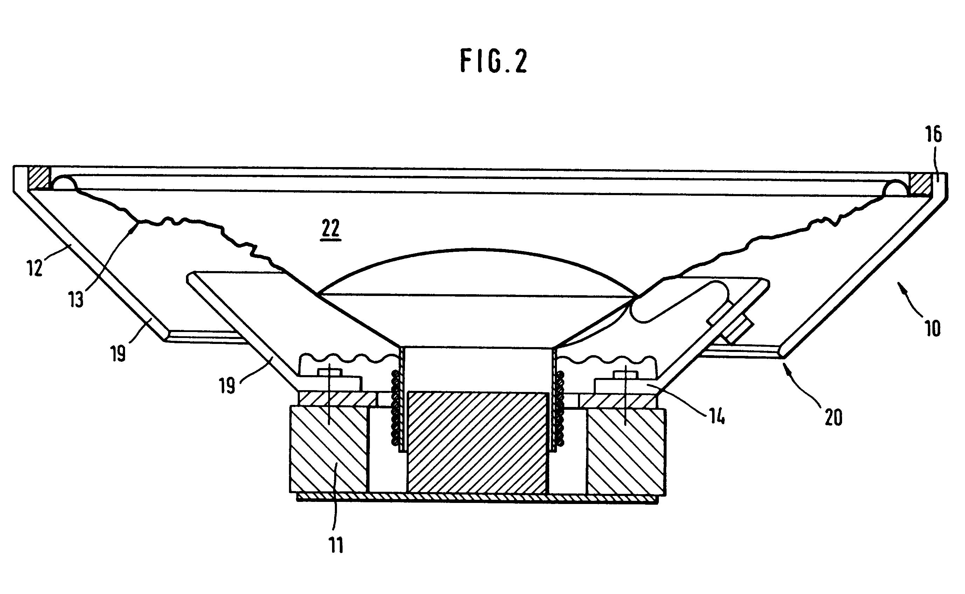

Ist der obere Flansch 16 mit einer Türverkleidung eines Kraftfahrzeuges verbunden (dies wurde nicht dargestellt) und wirkt auf das Magnetsystem längs der Pfeilrichtung eine Kraft P, die etwa der Kraftwirkung eines Unfalls entspricht, so schiebt sich das Magnetsystem 11 in Pfeilrichtung in den Raum 22, der von der Membran 13 begrenzt ist, ein. Diese Situation ist in Figur 2, welche im übrigen die in Figur 1 verwendeten Bezugszeichen enthält, näher veranschaulicht. Deutlich ist in dieser Figur 2 erkennbar, daß sich das Magnetsystem 11 dem oberen Flansch 16 des Korbes 12 genähert hat. Der Lautsprecherkorb 12 ist im Sollbruchstellenbereich 20 in zwei Teile zerbrochen. Diese Unterteilung bewirkt, daß die Kraft P, die auf das Magnetsystem 11 eingewirkt hat, nur in sehr vermindertem Umfang an den oberen Flansch 16 weitergegeben wird. Die bis zum Aufbrechen der Sollbruchstelle 20 auf den oberen Flansch 16 wirkende Kraft ist aber so gering, daß durch sie ein Eindringen des Lautsprechers 10 in den Innenraum des Kraftfahrzeugs mit Sicherheit ausgeschlossen ist.

Durch das Eindringen des Magnetsystems 11 und des an ihm noch befestigten Teils des Lautsprecherkorbes 12 in den Raum 22 wird die Membran ziehharmonikaförmig zusammengeschoben.

## Patentansprüche

1. Lautsprecher für den Einsatz in Kraftfahrzeugen,
**dadurch gekennzeichnet,**
daß der Korb (12) des Lautsprechers (10), an dessen einem Ende das Magnetsystem (11) fest angeordnet ist, so ausgebildet ist, daß Krafteinwirkungen (P) auf das Magnetsystem (11) bzw. auf das Ende des Korbes (12), an welchem das Magnetsystem (11) angeordnet ist, nicht oder nur in erheblich vermindertem Umfang auf das andere Ende des Korbes (12) übertragen werden.

2. Lautsprecher nach Anspruch 1,
**dadurch gekennzeichnet,**
daß bei einem beispielsweise aus Kunststoff gebildeten Lautsprecherkorb (12) dieser Korb (12) einen Sollbruchstellenbereich (20) aufweist, der so dimensioniert ist, daß er ab einer vorbestimmten Krafteinwirkung (P) auf das Magnetsystem (11) aufbricht und den Teil des Korbes (12), an dem das Magnetsystem (11) befestigt ist, von dem anderen Teil des Korbes (12) abkoppelt.

3. Lautsprecher nach Anspruch 2,
**dadurch gekennzeichnet,**
daß der Abstand (A) zwischen der Lautsprechermittelachse und dem Sollbruchstellenbereich (20) des Korbes (12) das Maß (B), welches zwischen der Lautsprechermittelachse und dem hiervon am weitesten beabstandeten Bereich des Magnetsystem (11) besteht, knapp übersteigt.

4. Lautsprecher nach Anspruch 2 oder Anspruch 3,
**dadurch gekennzeichnet,**
daß der Sollbruchstellenbereich (20) so ausgebildet ist, daß er im Falle des Auseinanderbrechens der beiden Teile des Korbes (12) ein Eindringen des mit dem Magnetsystem (11) verbundenen Korbteils in den Raum (22), der durch die Lautsprechermembran (13) begrenzt ist, nicht behindert.

5. Lautsprecher nach Anspruch 1,
**dadurch gekennzeichnet,**
daß der Lautsprecherkorb (12) einen umlaufenden Sollknickstellenbereich aufweist, der im Falle der Krafteinwirkung (P) auf das Magnetsystem (11) dafür sorgt, daß sich der Korb (12) im Sollknickstellenbereich ziehharmonikaförmig zusammenschiebt.

## Claims

1. Loudspeaker for use in motor vehicles, **characterised in that** the frame (12) of the loudspeaker (12), at one end of which the magnet system (11) is permanently arranged, is constructed so that forces (P) acting on the magnet system (11) or on the end of the frame (12),
respectively, at which the magnet system is arranged, are not transmitted, or are transmitted only to a considerably reduced extent, to the other end of the frame (12).

2. Loudspeaker according to Claim 1, characterised in that in the case of a loudspeaker frame (12) formed from plastic, for example, this frame (12) has a predetermined breaking point (20) which is dimensioned so that it ruptures beyond a predetermined force (P) acting on the magnet system (11) and the part of the frame (12) to which the magnet system (11) is attached is decoupled from the other part of the frame (12).

3. Loudspeaker according to Claim 2, characterised in that the distance (A) between the central axis of the loudspeaker and the predetermined breaking point (20) of the frame (12) barely exceeds the dimension (B) which exists between the central axis of the loudspeaker and the area of the magnet system (11) furthest away from it.

4. Loudspeaker according to Claim 2 or 3, characterised in that the predetermined breaking point (20) is constructed so that if the two parts of the frame (12) break apart, it does not prevent the frame section connected to the magnet system (11) from penetrating the space (22) that is bounded by the loudspeaker diaphragm (13).

5. Loudspeaker according to Claim 1, characterised in that the loudspeaker frame (12) has a continuous predetermined rupture zone which, in the event of a force (P) acting on the magnet system (11), ensures that the frame (12) telescopes concertina-fashion in the predetermined rupture zone.

## Revendications

1. Haut-parleur pour l'utilisation dans les véhicules, caractérisé en ce que le saladier (12) du haut-parleur (10), sur l'une des extrémités duquel est disposé fixe le système magnétique (11), est conçu de façon que les effets dynamiques (P) sur le système magnétique (11) ou bien sur l'extrémité du saladier (12) sur laquelle est disposé le système magnétique (11), ne sont pas transmis, ou seulement dans une mesure considérablement diminuée, sur l'autre extrémité du saladier (12).

2. Haut-parleur selon la revendication 1, caractérisé en ce que, pour un saladier de haut-parleur (12) en matière plastique par exemple, ce saladier (12) présente une zone de points destinés à la rupture (20) qui est dimensionnée de façon qu'à partir d'un effet dynamique (P) prédéfini sur le système magnétique (11), ladite zone rompt et désaccouple la partie du saladier (12) sur laquelle est fixé le système magnétique (11) de l'autre partie du saladier (12).

3. Haut-parleur selon la revendication 2, caractérisé en ce que la distance (A) entre l'axe central du haut-parleur et la zone de points destinés à la rupture (20) du saladier (12) excède légèrement la mesure (B) qui se trouve entre l'axe central du haut-parleur et la zone du système magnétique (11) la plus éloignée dudit axe.

4. Haut-parleur selon la revendication 2 ou la revendication 3, caractérisé en ce que la zone de points destinés à la rupture (20) est conçue de façon que, en cas de rupture entre les deux parties du saladier (12), elle n'entrave pas une pénétration de la partie du saladier qui est reliée au système magnétique (11) dans l'espace (22) limité par la membrane (13) du haut-parleur.

5. Haut-parleur selon la revendication 1, caractérisé en ce que le saladier (12) du haut-parleur présente une zone périphérique destinée au pliage qui, en cas d'effet dynamique (P) sur le système magnétique (11), fait que le saladier (12) s'aplatit en forme d'accordéon dans la zone destinée au pliage.
